Europäisches Patentamt

European Patent Office

Office européen des brevets

(11) Veröffentlichungsnummer: **0 433 956 A1**

## EUROPÄISCHE PATENTANMELDUNG

(21) Anmeldenummer: 90124492.1

(22) Anmeldetag: 18.12.90

(51) Int. Cl.⁵: **B28D 5/04,** H01L 21/00

(30) Priorität: 22.12.89 DE 3942671

(43) Veröffentlichungstag der Anmeldung:
26.06.91 Patentblatt 91/26

(84) Benannte Vertragsstaaten:
CH DE FR IT LI

(71) Anmelder: Wacker-Chemitronic Gesellschaft
für Elektronik-Grundstoffe mbH
Johannes-Hess-Strasse 24
W-8263 Burghausen(DE)

(72) Erfinder: Seifert, Dieter, Dr. Dipl.-Ing.
Siedlungsstrasse 12
W-8265 Neuötting(DE)
Erfinder: Egglhuber, Karl, Dipl.-Ing.
Unterstock 23 1/4
W-8333 Herbertsfelden(DE)

(54) Drahtsäge zum Abtrennen von Scheiben von stab- oder blockförmigen Werkstücken und ihre Verwendung.

㉗ Es wird eine Drahtsäge angegeben, bei der im Sägebereich über ein System von Umlenkrollen (4) eine Drahtharfe erzeugt wird, die sich beim Sägevorgang durch das Werkstück (1) arbeitet, wodurch nach und nach eine Vielzahl von Scheiben erzeugt wird. Erfindungsgemäß werden zu beiden Seiten des Werkstückes (1) in geringem Abstand gegebenenfalls verstellbare Hilfsführungsrollen (5) vorgesehen, die eine zusätzliche Umlenkung des Drahtes (3) bewirken. Daraus ergibt sich eine verbesserte Sägegenauigkeit und eine Verringerung des erforderlichen Aufwandes. Die Drahtsäge wird mit Vorteil beim Zersägen von stabförmigem Halbleiter-, wie auch blockförmigem Solarzellengrundmaterial verwendet.

Fig. 1

# DRAHTSÄGE ZUM ABTRENNEN VON SCHEIBEN VON STAB- ODER BLOCKFÖRMIGEN WERKSTÜCKEN UND IHRE VERWENDUNG.

Die Erfindung betrifft eine Drahtsäge zum Abtrennen von Scheiben von stab- oder blockförmigen Werkstücken, bei welcher ein über Rollensysteme bewegter Draht sich unter Zufuhr von abtragenden Mitteln in mehreren Sägespalten durch das Werkstück arbeitet, wobei der Draht im Sägebereich über ein System von Umlenkrollen, von denen mindestens eine angetrieben ist, geführt wird.

Derartige Drahtsägen sind bekannt und werden beim Zersägen von stab- oder blockförmigen Werkstücken, insbesondere Halbleiterstäben oder -blöcken aus Silicium, in Scheiben, welche beispielsweise als Ausgangsmaterial für die Herstellung von Solarzellen oder elektronischen Bauelementen verwendet werden, in zunehmenden Maße neben den Innenloch- und den Gattersägen eingesetzt. Einen Überblick gibt beispielsweise der Artikel "Wire saw slicing of large diameter crystals" von R. Wells, erschienen in Solid State Technology, Sept. 1987, S. 63-65 sowie die dort zitierte Literatur. Der Vorteil der Drahtsägen liegt hauptsächlich darin, daß sich mit ihnen verhältnismäßig geringe Scheibendicken erzielen und die Schnittverluste niedrig halten lassen.

Bei der Drahtsäge gemäß der US-PS 4,494,523 wird im eigentlichen Sägebereich der Draht harfenartig über drei im Dreieckzueinander angeordnete, zumindest Werkstückdurchmesser aufweisende Umlenkrollen geführt, von denen eine angetrieben ist. Das Werkstück befindet sich anfänglich im Inneren dieser prismenartigen Anordnung und wird beim Trennvorgang von unten gegen den waagerecht gespannten Bereich des bewegten Drahtes vorgeschoben. Hingegen ist bei der Drahtsäge gemäß US-PS 4,655,191 eine Vielzahl von einzelnen parallelen Drähten vorgesehen, deren Antrieb über Vorrats- bzw. Aufnahmerollen erfolgt, während sie im eigentlichen Sägebereich über nicht angetriebene Führungsrollen waagerecht ausgerichtet werden, so daß das Werkstück von oben gegen die Drahtharfe gedrückt werden und die Vorschubbewegung ausführen kann.

Bei der letztgenannten Variante muß zur Effektivierung des Sägevorganges jedoch der Vorwärtsbewegung der Drähte eine komplizierte Schwenkbewegung überlagert werden, was einen komplizierten und störungsanfälligen Schwenkmechanismus bedingt und eine stark variierende Beanspruchung der Führungsrollen mit sich bringt. Die andere Drahtsäge besitzt hingegen im Sägebereich eine verhältnismäßig große freie Drahtlänge, woraus sich beim Sägen von verschieden großen Werkstücken oder bei Sägevorgängen, bei denen sich die Eingriffslänge des Drahtes ändert, Schnittungenauigkeiten ergeben. Überdies erfordert das Zersägen von großformatigen Werkstücken, wie etwa Blöcken aus Solarsilicium mit mindestens etwa 10 cm Kantenlänge oder Stäben mit mindestens etwa 10 cm Durchmesser, bei denen die Werkstücklängen über ca. 20 cm liegen, entsprechend groß ausgelegte Umlenkrollen mit großen Achsabständen. Daraus ergeben sich große freie Drahtlängen, was wiederum aufgrund der für die erforderliche Sägegenauigkeit benötigten höheren Drahtkräfte den Einsatz von aufwendigen Lagern und hochwertigem, insbesondere hoch belastbarem Drahtmaterial bedingt.

Die Aufgabe der Erfindung lag darin, eine Drahtsäge anzugeben, mit der sich auch große Werkstücke mit hoher Genauigkeit und Zuverlässigkeit bei geringem Aufwand in Scheiben zersägen lassen, und die leicht an verschiedene Werkstückformate angepaßt werden kann.

Gelöst wird die Aufgabe durch eine Drahtsäge der eingangs genannten Art, welche dadurch gekennzeichnet ist, daß zwischen den den Sägebereich begrenzenden Umlenkrollen beidseits der Drahtabschnitte, welche mit dem Werkstück in Kontakt kommen, zusätzlich mindestens je eine nicht angetriebene Hilfsführungsrolle vorgesehen wird, durch welche dem Draht ein zusätzlicher Umlenkwinkel aufgegeben wird.

Unter dem Umlenkwinkel ist dabei der Winkel zu verstehen, der zwischen der gedachten Verlängerung des auf die Hilfsführungsrolle zulaufenden und dem von dieser weglaufenden, umgelenkten Drahtabschnitt besteht. Es wurde gefunden, daß bei einem Umlenkwinkel von weniger als 1° in den meisten Fällen eine zuverlässige Führung des Drahtes nicht mehr zu gewährleisten ist, während bei Umlenkwinkeln oberhalb etwa 30° die auftretenden Kräfte einen in der Regel nicht mehr vertretbaren apparativen Aufwand erfordern. Vorteilhaft werden Umlenkwinkel von 1° bis 30°, vorzugsweise von 2° bis 12° vorgesehen, da sich in diesem Bereich einerseits eine genaue Drahtführung erzielen läßt, während andererseits wegen der sich aus der geringen Drahtumlenkung ergebenden relativ geringen belastenden Drahtkräfte der Aufwand für die Hilfsführungsrollen sich in einem günstigen Rahmen hält. Insbesondere kann dadurch deren Durchmesser klein gehalten werden.

Bevorzugt werden die Hilfsführungsrollen in einer Position vorgesehen, welche sich möglichst nahe ein- und ausgangsseitig am Werkstück befindet, da dann die Drahtführung am genauesten ist. Dabei ist jedoch zu beachten, daß durch ihre Anordnung die Vorschubbewegung zwischen zu zertrennendem Werkstück und Drahtharfe nicht behindert wird. Bei Werkstücken mit sich stark ändernder Eingriffslänge des Drahtes, wie etwa Rundstäben, insbesondere mit Durchmessern von etwa 10 cm und darüber, oder schräggestellten Blöcken, können auch Hilfsführungsrollen vorgesehen werden, deren Position im Verlauf des Sägevorganges verstellbar ist, wobei die Verstellung grundsätzlich zwar auch schrittweise, bevorzugt aber kontinuierlich erfolgen kann, beispielsweise mittels hydraulischer Antriebe, Spindeln oder Stellmotoren. Besonders gute Schnittergebnisse lassen sich erfahrungsgemäß erzielen, wenn der Achsabstand der Hilfsführungsrollen höchstens bis zu 100 mm größer gewählt wird als die Summe aus der maximalen Eingriffslänge des Drahtes in einem Sägespalt und der Summe der beiden Radien der dem Werkstück benachbarten Hilfsführungsrollen. Insbesondere vorteilhaft ist jedoch eine möglichst nahe Anordnung der Hilfsführungsrollen am Werkstück.

Eine solche nahe Anordnung am Werkstück bewirkt eine hohe Steifigkeit des Drahtes gegen seitliches Ausweichen und gestattet damit eine besonders hohe Schnittgenauigkeit. Dies wird auch dadurch begünstigt, daß der Durchmesser der Hilfsführungsrollen deutlich geringer sein kann als der Durchmesser der Umlenkrollen, welche die mit hohen mechanischen Belastungen verbundene Umlenkung und den Antrieb des Drahtes übernehmen, während erstere nicht angetrieben sind und nur geringe Drahtkräfte aufnehmen müssen.

In vielen Fällen ist die durch die Hilfsführungsrollen gewährleistete Führungsgenauigkeit bereits so hoch, daß auf eigene Führungselemente, wie etwa Führungsrillen, bei den Umlenkrollen verzichtet werden kann, so daß sich diese in einfacherer und robusterer Form einsetzen lassen. Bei den Hilfsführungsrollen selbst kann die Führung des Drahtes über Rillen oder ähnliche Führungselemente erfolgen. Gegebenenfalls kann die Führungsgenauigkeit durch den Einsatz von steifem Trägermaterial, wie etwa hartem Kunststoff, für die Führungsrillen weiter verbessert werden.

Die durch die Erfindung erzielte gute Drahtführung ermöglicht auch den Einsatz von verhältnismäßig dünnen Sägedrähten oder Drähten aus Werkstoffen mit gegenüber den bisher üblichen Materialien geringerer Zugfestigkeit, beispielsweise auf Kunststoff- oder Leichtmetallbasis, wie auch faserverstärkten oder aus unterschiedlichen Schichten aufgebauten Drähten. Mit derartigen dünnen und entsprechend leichten Drähten lassen sich die Materialverluste beim Sägevorgang verringern. Oftmals kann auch die Zugkraft im Draht reduziert werden, wodurch sich dieser für eine größere Anzahl von Schnitten einsetzen läßt. Beim Einsatz von Drähten aus chemisch resistenten Materialien wie Kunststoffen sind auch Varianten des Sägevorganges denkbar, bei denen dem in der üblichen Weise beim Sägen in den Sägespalt zugeführten Läpptrennmittel eine das Werkstück chemisch abtragende Komponente, beispielsweise ein Ätzmittel, zugefügt wird. Damit kann das beim Sägen entstandene "damage", d.h. die mechanischen Störungen der perfekten Kristallorientierung im Oberflächenbereich, unmittelbar beim Trennvorgang wieder beseitigt oder zumindest reduziert werden. Beim Zersägen von Siliciumstäben oder -blöcken kommen als derartige ätzende Zusätze beispielsweise alkalische Lösungen wie etwa wässrige Natronlauge, oder saure Lösungen wie etwa wässrige Flußsäure/Salpetersäuremischungen in Frage, wobei der Angriff der chemisch abtragenden Komponente auf die mit dem Draht in Reibkontakt stehenden Bereiche des Werkstückes erfolgt.

Ansonsten kann der Sägevorgang mit der erfindungsgemäßen Drahtsäge unter den von den üblichen Drahtsägen her bekannten Bedingungen durchgeführt werden. Dies gilt beispielsweise für die Drahtgeschwindigkeiten von in der Regel etwa 1 bis 10 m/sec, die Anpreßdrücke des Werkstückes von meist etwa 0.01 bis 0.06 $N/mm^2$, oder auch für die beim Sägen zugeführten Läpptrennmittel/Kühlmittelmischungen, welche beispielsweise aus in Öl suspendierten Siliciumcarbid- oder Korundkörnern bestehen können. Diese Angaben sind jedoch nur als Richtwerte, nicht aber im Sinne einer Beschränkung zu sehen. Insbesondere können bei Verwendung von Kunststoffdrähten gegenüber diesen Angaben höhere Geschwindigkeiten und geringere Drücke zur Anwendung kommen.

Die Vorschubbewegung kann beispielsweise in der von den üblichen Drahtsägen her bekannten Art durch eine Bewegung des Werkstückes gegen die Drahtharfe vorgenommen werden. Gemäß einer vorteilhaften Ausführungsform wird jedoch die Vorschubbewegung bei ruhendem Werkstück durch eine entsprechende Bewegung der Drahtharfe ausgeführt. Der Vorteil dieser Variante liegt darin, daß die Vorschubführungen in günstiger Lage außerhalb des Schneidbereiches angeordnet werden können. Somit muß bei der Anordnung der Hilfsführungsrollen nicht noch auf den Platzbedarf des Werkstückvorschubes Rücksicht genommen werden. Das ruhende Werkstück ermöglicht eine besonders steife Werkstückanordnung, welche eine hohe Sägegenauigkeit gestattet. Dazu trägt auch die Tatsache bei, daß bei dieser Anordnung die Vorschubführungen besonders stabil dimensionierbar sind.

Grundsätzlich sind auch Ausführungsformen möglich, bei denen die Vorschubbewegung aus einer Kombination von Bewegungen von Werkstück und Drahtharfe resultiert. Gegebenenfalls können auch der eigentlichen Vorschubbewegung quer dazu gerichtete Bewegungskomponenten überlagert werden, so daß der Sägevorgang anstelle von ebenen Scheibenoberflächen solche mit bestimmten Konturen, wie etwa Krümmungen oder Rillen, ergibt.

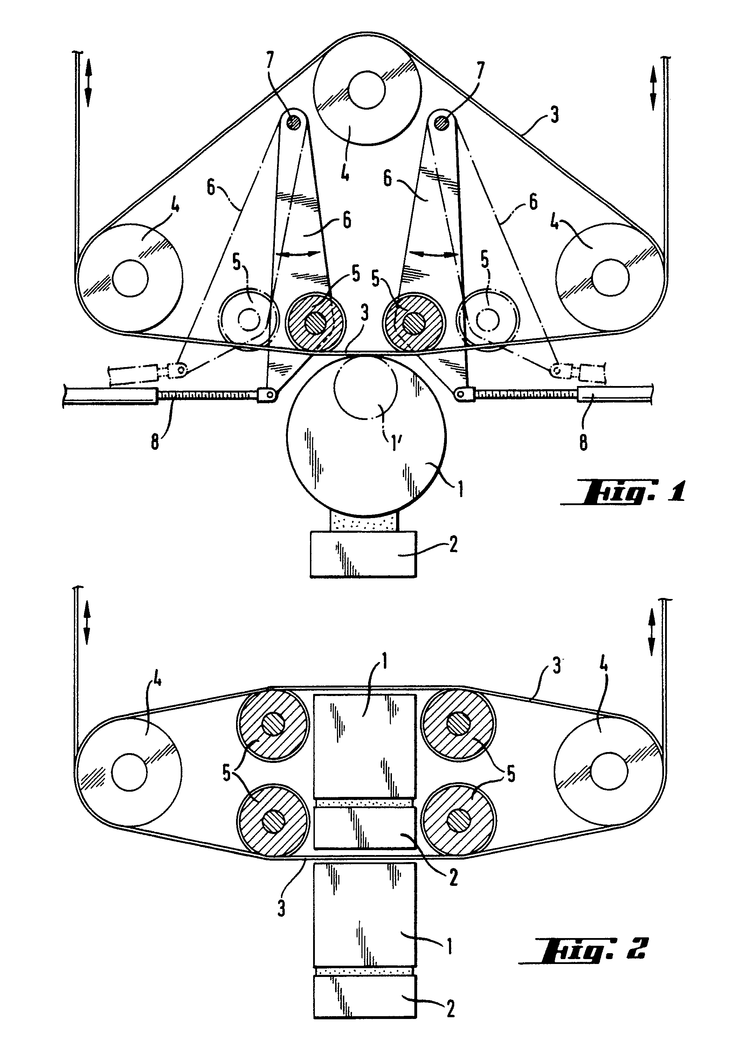

Nachstehend wird die Erfindung an Hand der in den Figuren 1 und 2 beispielhaft dargestellten möglichen Ausführungsformen näher erläutert. Figur 1 zeigt eine Anordnung mit verstellbaren Hilfsführungsrollen, Figur 2 eine Anordnung zum Zersägen von zwei Werkstücken gleichzeitig. Gleiche Bestandteile sind in beiden Figuren mit den selben Bezugszeichen versehen.

Aus Gründen der Übersichtlichkeit sind jeweils nur die zur Darstellung des Erfindungsgedankens unerläßlichen Bestandteile der Drahtsägen im Sägebereich gezeigt, während auf die Darstellung weiterer üblicher und dem Fachmann ohnehin geläufiger Einrichtungen, z.B. zur Lagerung der Drahtführungsrollen und des Werkstückträgers im Maschinengestell verzichtet wird. Dies gilt auch für die Einrichtungen zum Auf- und Abspulen sowie zum Spannen und Entspannen des Drahtes vor und nach dem Passieren des Systems der Umlenkrollen, für die Versorgung der Vielzahl der Sägespalte, deren Anzahl typisch etwa 100 bis 2000 beträgt, mit Läpptrennmittel, sowie auch dessen Entsorgung.

Die Figur 1 zeigt das Werkstück 1, beispielsweise in Form eines Rundstabes, der z.B. aus Halbleitermaterial wie Silicium, Germanium, Galliumarsenid oder Indiumphosphid, oder oxidischem Material wie Gallium-Gadolinium-Granat oder Quarz bestehen kann. Zur Veranschaulichung anderer Größenverhältnisse ist auch ein kleineres Werkstück 1' angedeutet. Das Werkstück 1 ist auf eine Schneidunterlage 2 aufgekittet, wobei durch die nicht dargestellte Vorschubeinrichtung eine Vorschubbewegung zwischen Werkstück und der durch den Draht 3 repräsentierten, eigentlich aber aus einer Vielzahl von im vorgesehenen Abstand senkrecht zur Zeichenebene parallel nebeneinander verlaufenden Drahtabschnitten bestehenden Drahtharfe ausgeführt wird. Um die parallelen Drahtabschnitte zu erzeugen, wird der Draht 3 wendelartig über die Umlenkrollen 4 geführt.

Durch die beiden Hilfsführungsrollen 5 wird der Draht 3 geringfügig aus dem geradlinigen Verlauf ausgelenkt. Bei der vorgestellten Anordnung haben sich bereits kleine Umlenkwinkel bei den Hilfsführungsrollen 5 im Bereich von 2° bis 12° als ausreichend erwiesen, wobei diese Angabe sich auf den ohne Kontakt zum Werkstück frei laufenden Draht bezieht und eine beim Sägevorgang mögliche stärkere Umlenkung durch die Einwirkung des Werkstückes unberücksichtigt läßt.

Um die freie Drahtlänge zwischen den Auflagestellen des Drahtes am Umfang der Hilfsführungsrollen 5 und der Ein- bzw. Austrittsstelle am Werkstück 1 im optimalen Bereich halten zu können, ist es möglich, die Hilfsführungsrollen 5 verstellbar zu gestalten. Dazu können sie beispielsweise auf Lagerschilden 6 montiert sein, die um den Drehpunkt 7 geschwenkt werden können. Eine andere Verstellmöglichkeit liegt z.B. darin, parallel zur Ebene der Drahtharfe in Längsführungen verschiebbare Hilfsführungsrollen 5 vorzusehen. Mit fortschreitendem Sägevorgang kann dann der Abstand der Hilfsführungsrollen voneinander, und damit die freie Drahtlänge, der sich ändernden Eingriffslänge im Sägespalt angepaßt werden. Dies kann beispielsweise mittels Verstelleinrichtungen wie z.B. einer Spindel 8 vorgenommen werden, welche vorzugsweise gesteuert verstellbar ist und damit, vorteilhaft in Kombination mit einer Vorschubsteuerung, eine Automatisierung des Prozesses ermöglicht.

Die aus der Anordnung mit dem Werkstück benachbarten Hilfsführungsrollen resultierenden günstigen Sägeeigenschaften ermöglichen es sogar, im Sägebereich lediglich zwei Umlenkrollenvorzusehen. Eine solche mögliche Ausführungsform ist in der Figur 2 dargestellt. Als Werkstücke 1 sind zwei Blöcke mit quadratischem Querschnitt vorgelegt, wie sie insbesondere bei der Herstellung von Solarzellengrundmaterial auf Basis von gegossenem Silicium anfallen. Beim Sägen werden diese Blöcke üblicherweise auf Schneidunterlagen 2, beispielsweise aus keramischem Material, aufgekittet. Der Draht 3 umläuft die Umlenkrollen 4, von denen mindestens eine angetrieben ist, und bildet dabei die Drahtharfe aus, mittels derer das Werkstück 1 in eine Vielzahl von dünnen Scheiben mit einer Dicke von typisch 0.1 bis 1 mm zersägt wird.

Mit Hilfe der in einer nach Maßgabe des Werkstückformates festgelegten Position installierten Hilfsführungsrollen 5 wird, mit einem Umlenkwinkel von ca. 6°, der Draht geringfügig aus dem im wesentlichen waagerechten Verlauf ausgelenkt. Der Draht 3 arbeitet sich nach Maßgabe der Vorschubbewegung im Bereich zwischen jeweils zwei Hilfsführungsrollen nach und nach unter Läppmittelzufuhr und Materialabtrag durch die Werkstücke hindurch, bis die Scheiben abgetrennt sind. Der Vorschub kann dabei bei einem Werkstück von innen nach außen, bei dem anderen von außen nach innen erfolgen; gegebenenfalls können beide Vorschubeinrichtungen aneinander gekoppelt werden. Gleichermaßen möglich ist jedoch auch eine Vorschubbewegung des Rollensystems oder eine solche durch Werkstück und Rollensystem.

Es ist jedoch nicht zwingend vorgeschrieben, jeweils zwei Werkstücke gleichzeitig zu sägen. Es sind auch Anordnungen denkbar, bei denen beispielsweise auf das obere Paar von Hilfsführungsrollen verzichtet ist, so daß jeweils nur ein Werkstück gesägt werden kann. Allgemein eignen sich die erfindungsgemäßen Drahtsägen auch zum Zersägen von Werkstückgruppen, die aus zwei oder mehr Einzelwerkstücken bestehen. Dabei kann es erforderlich sein, zwischen einzelnen Werkstücken zusätzliche Hilfsführungsrollen vorzusehen.

Auch die in der Figur gezeigte Position der Werkstücke mit zur Drahtharfe paralleler ebener Oberfläche beim Sägevorgang ist nicht zwingend vorgeschrieben. In vielen Fällen hat es sich insbesondere wegen der geringeren Rißbildung und der leichteren Einleitung des Sägevorganges als günstig erwiesen, das oder die Werkstücke in einer gekippten Position zu sägen, d.h. in einer Position, in der die ebene Oberfläche um etwa 1 bis 45° aus der zur Drahtharfe parallelen Anordnung abweicht, so daß zuerst die oberste Längskante des Blockes in Kontakt mit dem Sägedraht kommt. Bei einer solchen gekippten Werkstückanordnung beim Sägen haben sich verstellbare Hilfsführungsrollen 5 besonders bewährt, da sie sich an die sich ändernden Eingriffslängen im Verlauf des Sägevorganges anpassen lassen.

Die beiden hier vorgestellten möglichen Anordnungen der Umlenk- und Hilfsführungsrollen sind nur im Sinne von Beispielen, nicht aber im Sinne einer Beschränkung zu verstehen.

Die erfindungsgemäße Drahtsäge ermöglicht sehr genaue Schnitte auch bei wechselnden Werkstückformaten. Da die Hilfsführungsrollen klein, einfach und austauschbar sind, ergeben sich nur geringe Kosten für diese Erhöhung der Genauigkeit. Gleichzeitig verbessert sich die Nutzung der Umlenkrollen, insbesondere auch durch die Möglichkeit der Positionsanpassung der Hilfsführungsrollen an die Werkstückkontur, die vor oder während des Sägevorganges erfolgen kann. Schließlich ergibt sich auch ein Kostenvorteil daraus, daß wegen der geringen freien Drahtlänge die Anforderungen an die Belastbarkeit der Drähte weniger streng sein können und diese entsprechend häufiger verwendbar sind.

## Ansprüche

1. Drahtsäge zum Abtrennen von Scheiben von stab- oder blockförmigen Werkstücken, bei welcher ein über Rollensysteme bewegter Draht sich unter Zufuhr von abtragenden Mitteln in mehreren Sägespalten durch das Werkstück arbeitet, wobei der Draht im Sägebereich über ein System von Umlenkrollen, von denen mindestens eine angetrieben ist, geführt wird, dadurch gekennzeichnet, daß zwischen den den Sägebereich begrenzenden Umlenkrollen beidseits der Drahtabschnitte, welche mit dem Werkstück in Kontakt kommen, zusätzlich mindestens je eine nicht angetriebene Hilfsführungsrolle vorgesehen wird, durch welche dem Draht ein zusätzlicher Umlenkwinkel aufgegeben wird.

2. Drahtsäge nach Anspruch 1, dadurch gekennzeichnet, daß der Umlenkwinkel 1° bis 30°, vorzugsweise 2° bis 12° beträgt.

3. Drahtsäge nach den Ansprüchen 1 oder 2, dadurch gekennzeichnet, daß die Hilfsführungsrollen verstellbar sind.

4. Drahtsäge nach einem oder mehreren der Ansprüche 1 bis 3, dadurch gekennzeichnet, daß ein Draht aus chemisch resistentem Material verwendet und beim Sägen dem abtragenden Mittel das Werkstück chemisch abtragende Komponenten zugesetzt werden.

5. Drahtsäge nach einem oder mehreren der Ansprüche 1 bis 4, dadurch gekennzeichnet, daß beim Sägen von blockförmigen Werkstücken diese in gekippter Stellung mit dem Draht in Kontakt gebracht werden.

6. Drahtsäge nach einem oder mehreren der Ansprüche 1 bis 5, dadurch gekennzeichnet, daß beim Sägevorgang im Sägebereich zwischen Werkstück und Draht eine Vorschubbewegung des Drahtes ausgeführt wird.

7. Drahtsäge nach einem oder mehreren der Ansprüche 1 bis 5, dadurch gekennzeichnet, daß beim Sägevorgang im Sägebereich zwischen Werkstück und Draht eine Vorschubbewegung des Werkstückes ausgeführt wird.

8. Drahtsäge nach den Ansprüchen 6 oder 7, dadurch gekennzeichnet, daß der Vorschubbewegung eine zusätzliche quergerichtete Bewegung überlagert ist.

9. Verwendung der Drahtsäge nach einem oder mehreren der Ansprüche 1 bis 8 zum Zersägen von stab- oder blockförmigen Werkstücken aus Halbleitermaterial.

10. Verwendung nach Anspruch 9, dadurch gekennzeichnet, daß die Werkstücke in Scheiben von 0.1 bis 1 mm Dicke zersägt werden.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 10, Nr. 281 (M-520)[2337], 25. September 1986; & JP-A-61 100 366 (SUMITOMO METAL IND. LTD) 22-10-1986 --- | 1-3,6,7 | B 28 D 5/04 H 01 L 21/00 |
| A | FR-A-2 442 702 (PIAT) * Seite 4, Zeilen 27-35; Ansprüche 1-4,6; Figur 1 * --- | 1-3,6,7 | |
| A | US-A-3 599 623 (PHY) * Spalte 3, Zeilen 6-9; Figur 1 * --- | 1,9 | |
| A | DE-B-2 553 820 (KERNFORSCHUNGSANLAGE JULICH) * Spalte 4, Zeilen 37-41 * --- | 4 | |
| A | DE-U-8 334 219 (NEUHAUSER) * Anspruch 1 * ----- | | |

RECHERCHIERTE
SACHGEBIETE (Int. Cl.5)

B 28 D 1/00
B 28 D 5/00
B 23 D 57/00
B 23 D 53/00
H 01 L 21/00

Der vorliegende Recherchenbericht wurde für alle Patentansprüche erstellt

| Recherchenort | Abschlußdatum der Recherche | Prüfer |
|---|---|---|
| Den Haag | 28 Februar 91 | LILIMPAKIS E. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------
& : Mitglied der gleichen Patentfamilie, übereinstimmendes Dokument